# EUROPÄISCHE PATENTSCHRIFT

(11) **EP 2 836 731 B1**
(45) Veröffentlichungstag und Bekanntmachung des Hinweises auf die Patenterteilung: **10.08.2016**
(21) Anmeldenummer: 13715673.3
(22) Anmeldetag: 09.04.2013
(51) Int. Cl.: F16C 19/55, F16C 11/06, F16C 23/08, F16C 19/18

(54) **WÄLZKÖRPERPENDELLAGER, INSBESONDERE ZUR LAGERUNG VON KREISELSYSTEMEN EINES KREISELKOMPASSES, SOWIE KREISELKOMPASSVORRICHTUNG MIT EINEM SOLCHEN LAGER**
SPERICAL ROLLING ELEMENT BEARING, IN PARTICULAR FOR THE GYRO OF A GYRO COMPASS AND GYRO COMPASS WITH SUCH A BEARING
ROULEMENT SPHÉRIQUE, NOTAMMENT POUR LE GYROSCOPE D'UN GYROCOMPAS ET GYROCOMPAS AVEC UN TEL ROULEMENT

(30) Priorität: 12.04.2012 DE 102012205956
(43) Veröffentlichungstag der Anmeldung: 18.02.2015
(73) Patentinhaber: Raytheon Anschütz GmbH, 24106 Kiel (DE)
(72) Erfinder: BLANKE, Rolf, 24119 Kronshagen (DE)
(74) Vertreter: Eisenführ Speiser
(86) Internationale Anmeldenummer: PCT/EP2013/057395
(87) Internationale Veröffentlichungsnummer: WO 2013/153066

(56) Entgegenhaltungen:
- EP-A1- 0 694 759
- DE-U1- 8 107 111
- FR-A1- 2 872 233
- JP-A- 2004 169 808
- US-A- 2 983 558
- US-A- 3 698 251

## Beschreibung

Die Erfindung betrifft ein Wälzkörperpendellager, insbesondere zur Lagerung von Kreiselsystemen eines Kreiselkompasses, mit einem Rotationskörper mit einem konvexen, in Bezug auf die erste Achse teilsphärischen Außenflächenabschnitt, der in Bezug auf eine im Wesentlichen quer zur ersten Achse aufgespannte erste Symmetrieebene spiegelsymmetrisch ausgebildet ist, einem ersten Hohlkörper mit einem den Rotationskörper im Bereich seines teilsphärischen Außenflächenabschnittes aufnehmenden ersten Hohlraum, der an einer ersten Stirnseite eine erste Öffnung, an einer der ersten Stirnseite gegenüberliegenden zweiten Stirnseite eine zweite Öffnung und zwischen diesen beiden Öffnungen einen konkaven, in Bezug auf eine zweite Achse teilsphärischen Innenflächenabschnitt aufweist, der in Bezug auf eine im Wesentlichen quer zur zweiten Achse aufgespannte zweite Symmetrieebene spiegelsymmetrisch ausgebildet ist, wobei die erste Symmetrieebene und die zweite Symmetrieebene um eine gemeinsame Schnittlinie und die erste Achse und die zweite Achse um einen im Wesentlichen auf der Schnittlinie liegenden gemeinsamen Drehpunkt gegeneinander verschwenkbar sind, der Mittelpunkt des teilsphärischen Außenflächenabschnittes des Rotationskörpers, der Mittelpunkt des teilsphärischen Innenflächenabschnittes des ersten Hohlkörpers und der Drehpunkt im Wesentlichen zusammenfallen und zwischen dem teilsphärischen Außenflächenabschnitt des Rotationskörpers und dem teilsphärischen Innenflächenabschnitt des ersten Hohlkörpers ein erster Zwischenraum gebildet ist, im ersten Zwischenraum laufenden Wälzkörpern und einem im ersten Zwischenraum angeordneten und die Wälzkörper aufnehmenden ersten Käfig. Ein derartiges Wälzkörperpendellager ist aus der DE 81 07 111 U1 bekannt. Ferner betrifft die Erfindung eine Kreiselkompassvorrichtung mit einem derartigen Lager.

In Kreiselkompassanlagen, die hauptsächlich auf Schiffen eingesetzt werden, wird die für die Kreiselkompass-Funktion notwendige Pendellagerung des richtungsweisenden Kreiselsystems zurzeit über ein einfaches Kugelgleitlager realisiert, bei welchem ein Stab radial an einem kugelförmigen Lagerelement angeordnet ist, der von einem teilsphärischen Hohlraum in einem Gehäuse aufgenommen wird, wobei die Oberfläche des kugelförmigen Lagerelementes und die teilsphärische Innenwandung des Gehäuses gemeinsam ein Gleitlager bilden. Hierzu wird beispielhaft auf die DE 30 11 727 A1 verwiesen. Obwohl die Technik des Kreiselkompasses seit mehreren Jahrzehnten erfolgreich eingesetzt wird und zur Erhöhung der Präzision der Kursanzeige und der Zuverlässigkeit stets weiterentwickelt worden ist, sind dennoch vereinzelt immer wieder kleinere Kursfehler zu beobachten. Bei diesem Problem handelt es sich um vom Kreiselkompass angezeigte Kursänderungen, obwohl tatsächlich keine Kursänderungen stattfinden. Wenn sich dabei das Schiff nur geringfügig neigt, wird dennoch die Kreiselkugel des Kreiselkompasses angeregt, wodurch es zu Kursabweichungen kommen kann. Als mögliche Ursachen eines solchen Kursfehlers werden mehrere Gründe angeführt. Als eine Ursache wird eine Schwergängigkeit im Pendelgelenklager, verbunden mit einem Lotwinkelfehler, der sich je nach Schiffsneigung auszupendelnden Hüllkugel, vermutet, wodurch die Kreiselkugel des Kreiselkompasses eine asymmentrische Lagerung erfährt und es somit zu einem Kursfehler kommen kann.

Ein zentrales Problem bildet der sog. Lotfehler, mit dem das Kreiselsystem in statischen und dynamischen Betriebszuständen belegt ist. Im statischen Betrieb findet nach einer gewissen Zeit ein Übergang von der günstigeren Gleitreibung zwangsläufig in eine ungünstigere Haftreibung statt, welche insbesondere im Falle von höheren Reibbeiwerten das Pendel des Kreiselkompasses am Auspendeln hindert. Diese Haftreibung kann dann nur bei größeren Pendelbewegungen durch Losbrechen überwunden werden, wenn das Schiff stärkere Roll- und/oder Schaukelbewegungen ausführt. Dieses Phänomen wird auch als Stick-Slip-Effekt bezeichnet. Im dynamischen Betrieb mit größeren Pendelbewegungen überstreicht das Pendel weitere Strecken, die mit größeren Relativbewegungen der beiden Lagerflächen zueinander einhergehen. Hier sorgen dann asymmetrische Formausbildungen und unterschiedliche Reibwerte innerhalb des Lagers für eine ungleichförmige Pendelbewegung, welche ebenfalls mit Kursfehlern quittiert werden.

Um das Risiko eines Stick-Slip-Effektes zu verringern, ist es denkbar, die Auswahl der als geeignet erscheinenden Gleitlager mit einer besonderen Sorgfalt vorzunehmen, was jedoch den Aufwand erheblich erhöht. Lösungen auf Basis von kardanischen Aufhängungen sind ebenfalls im Stand der Technik etabliert, führen jedoch zu Nachteilen aufgrund von Winkelfehlern bei Pendelauslenkungen, die im Kardanfehler begründet sind.

Ausgehend von einem Kugelgelenk-Wälzlager gemäß der US 3 698 251, die den nächstkommenden Stand der Technik bildet, von dem die vorliegende Erfindung ausgeht, ist es eine Aufgabe der Erfindung, ein verbessertes Wälzkörperpendellager vorzuschlagen, mit dem sich die zuvor angesprochenen Nachteile des Standes der Technik und insbesondere der erwähnte Stick-Slip-Effekt zumindest im Wesentlichen vermeiden lassen und das sich insbesondere für den Einsatz in einem Kreiselkompass zur Lagerung dessen Kreiselsystems eignet.

Gelöst wird diese Aufgabe mit einem Wälzkörperpendellager, insbesondere zur Lagerung des Kreisels eines Kreiselkompasses, mit einem Rotationskörper mit einem konvexen, in Bezug auf die erste Achse teilsphärischen Außenflächenabschnitt, der in Bezug auf eine im Wesentlichen quer zur ersten Achse aufgespannte erste Symmetrieebene spiegelsymmetrisch ausgebildet ist, einem ersten Hohlkörper mit einem den Rotationskörper im Bereich seines teilsphärischen Außenflächenabschnittes aufnehmenden ersten Hohlraum, der an einer ersten Stirnseite eine erste Öffnung, an einer der ersten Stirnseite gegenüberliegenden zweiten Stirnseite eine zweite Öffnung und zwischen diesen beiden Öffnungen einen konkaven, in Bezug auf eine zweite Achse teilsphärischen Innenflächenabschnitt aufweist, der in Bezug auf eine im Wesentlichen quer zur zweiten Achse aufgespannte zweite Symmetrieebene spiegelsymmetrisch ausgebildet ist, wobei die erste Symmetrieebene und die zweite Symmetrieebene um eine gemeinsame Schnittlinie und die erste Achse und die zweite Achse um einen im Wesentlichen auf der Schnittlinie liegenden gemeinsamen Drehpunkt gegeneinander verschwenkbar sind, der Mittelpunkt des teilsphärischen Außenflächenabschnittes des Rotationskörpers, der Mittelpunkt des teilsphärischen Innenflächenabschnittes des ersten Hohlkörpers und der Drehpunkt im Wesentlichen zusammenfallen und zwischen dem teilsphärischen Außenflächenabschnitt des Rotationskörpers und dem teilsphärischen Innenflächenabschnitt des ersten Hohlkörpers ein erster Zwischenraum gebildet ist, mit im ersten Zwischenraum laufenden Wälzkörpern, mit einem im ersten Zwischenraum angeordneten und die Wälzkörper aufnehmenden ersten Käfig, und einem ersten Anschlag, an den in einer maximalen Schwenkstellung des Rotationskörpers der erste Käfig oder mindestens ein benachbarter Wälzkörper in Anlage gelangt, wobei die Anordnung und Ausbildung des Rotationskörpers, des ersten Hohlkörpers, der Wälzkörper und des ersten Käfigs derart getroffen ist, dass in der maximalen Schwenkstellung des Rotationskörpers die Wälzkörper im Wesentlichen noch im ersten Zwischenraum verbleiben, gekennzeichnet durch einen im Bereich benachbart zum ersten Anschlag am Rotationskörper vorgesehenen zweiten Anschlag, der gegen den ersten Käfig und/oder mindestens einen benachbarten Wälzkörper stößt, wenn sich der Rotationskörper in der maximalen Schwenkstellung gegenüber der zweiten Achse befindet.
Mithilfe der Erfindung wird ein Wälzkörperpendellager zur Verfügung gestellt, das die Möglichkeit einer gleichzeitigen Dreh- und Schwenklagerung und somit einer dreidimensionalen Lagerung bietet. Dabei weist das erfindungsgemäße Wälzkörperpendellager einen großen Berührungs- bzw. Kontaktwinkel auf, wodurch die Reibung im Lager verringert wird. Hierbei spielt die geometrische Ausführung gemäß der Erfindung eine bedeutende Rolle, um die geforderten großen Pendelwinkel, insbesondere von umlaufend etwa 38°, zu erzielen. Mithilfe der erfindungsgemäßen Konstruktion werden die Wälzlagerbestandteile entsprechend sicher geführt, damit diese nicht herausfallen und die Lagerkräfte an vorbestimmten Stellen aufnehmen. Die geometrische Ausführung gemäß der Erfindung beeinflusst federführend die Belastung der Lagerkontaktflächen und eignet sich für die Verwendung von Standardwälzlagerkugeln. Die erfindungsgemäße Konstruktion bietet auch weitere bauliche Vorteile. So können die als Lagerflächen vorgesehenen teilsphärischen Flächen sowie der Käfig jeweils einstückig und ungeteilt ausgeführt sein. Ferner ist es ausreichend, die Wälzkörper durch den Käfig nicht in Richtung zum den Lagermittelpunkt bildenden Drehpunkt, sondern nur in tangentialer Richtung der teilsphärischen Flächen und somit in Laufflächenrichtung zu positionieren.

Mithilfe der Erfindung lässt sich somit vorteilhaft eine Verbesserung der Lottreue des Pendels erzielen. Ferner ermöglicht die Erfindung einen reibungsarmen Betrieb und die Vermeidung des Stick-Slip-Effektes. Dies führt zu einer deutlichen Steigerung der Leistungsfähigkeit und Genauigkeit eines Kreiselkompasses, in den das erfindungsgemäße Wälzkörperpendellager eingebaut ist. Ebenfalls lässt sich mithilfe der Erfindung die Wiederkehrgenauigkeit und letztendlich die Kursqualität des eingesetzten Kreiselkompasses deutlich erhöhen. Schließlich ermöglicht die erfindungsgemäße Konstruktion eine einfache Montage und einen einfachen Einbau.

Demnach bietet die Erfindung eine neuartige Kombination von Kreiselkompass und einem Wälzkörperpendellager in einer zugehörigen Gelenkbaugruppe.

Bevorzugte Ausführungen und Weiterbildungen der Erfindung sind in den abhängigen Ansprüchen angegeben.

Zweckmäßigerweise sollte der zweite Anschlag ausgebildet sein, in Anlage an eine Stirnseite des ersten Käfigs zu gelangen, wodurch in besonders wirkungsvoller Weise ein Austritt der im Käfig gefangenen Wälzkörper aus dem ersten Zwischenraum verhindert wird, der ja eine sphärische Kugelbahn für die Wälzkörper bildet.

Bevorzugt sollte der erste Anschlag derart ausgebildet sein, dass nur die zu ihm benachbarten Wälzkörper in Anlage an den ersten Anschlag bringbar sind. Somit trägt auch der erste Anschlag dazu bei, einen unbeabsichtigten Austritt der Wälzkörper aus dem ersten Zwischenraum wirkungsvoll zu verhindern.

Zweckmäßigerweise sollte der erste Anschlag den teilsphärischen Innenflächenabschnitt des ersten Hohlkörpers begrenzen, entlang dessen ja die Wälzkörper laufen.

Eine konstruktiv besonders kompakte Lösung ergibt sich bei einer weiteren bevorzugten Ausführung dadurch, dass der erste Anschlag im Bereich der benachbart zum zweiten Anschlag befindlichen Öffnung des ersten Hohlkörpers vorgesehen ist. Bei einer Weiterbildung dieser Ausführung ist zweckmäßigerweise der erste Anschlag als ein in die Öffnung ragender, vorzugsweise im Wesentlichen vollständig umlaufender, Steg ausgebildet.

Zur Erzielung einer möglichst kompakten Bauform sollte bevorzugt die axiale Länge des Rotationskörpers im Wesentlichen gleich der axialen Länge des Käfigs sein.

Für eine sichere gleichzeitige Dreh- und Schwenklagerung ist es in vielen Fällen ausreichend, die Wälzkörper im ersten Zwischenraum in zwei übereinanderliegenden Reihen anzuordnen.

Zweckmäßigerweise sollten die Wälzkörper als Kugeln ausgebildet sein.

Bevorzugt weist der Rotationskörper einen Stab auf, dessen Längsachse im Wesentlichen mit der ersten Achse des Rotationskörpers zusammenfällt. Dieser Stab lässt sich insbesondere für eine ortsfeste bzw. stationäre Befestigung des Wälzkörperpendellagers an einer Komponente eines Fahrzeuges verwenden. Wegen der Ausbildung des teilsphärischen Außenflächenabschnittes weist der Rotationskörper im Bereich dieses Außenflächenabschnittes folgerichtig einen teilsphärischen Abschnitt auf, wobei im vorliegenden Ausführungsbeispiel der Rotationskörper zusätzlich noch den erwähnten Stab aufweist. Der teilsphärische Abschnitt und der Stab können beispielsweise einstückig miteinander ausgebildet sein. Alternativ ist es aber auch denkbar, den Stab am teilsphärischen Abschnitt anzuordnen, wobei in diesem Fall der Rotationskörper auch nur von dem erwähnten teilsphärischen Abschnitt allein definiert sein kann.

Eine ebenso einfache wie wirkungsvolle konstruktive Lösung für die Realisierung des zweiten Anschlages zeichnet sich bei einer weiteren Ausführung dadurch aus, dass der zweite Anschlag am Stab angeordnet und als den Stab umgebender und von diesem abstehender Kragen ausgebildet ist. Durch die umlaufende Ausbildung um den Stab wird außerdem gewährleistet, dass der Anschlag seine Wirkung in jeder Drehstellung des Rotationskörpers und somit des daran angeordneten Stabes um die dessen Längsachse bildende erste Achse entfaltet.

Zur Definition der maximalen Schwenkstellung ist es bevorzugt, einen stationär bzw. raumfest angeordneten dritten Anschlag vorzusehen, der so ausgebildet ist, dass der Stab in seiner maximalen Schwenkstellung am dritten Anschlag anliegt. Bei einer Variante dieser Ausführung weist der dritte Anschlag eine gegenüber der zweiten Achse geneigte Fläche auf, an die der Stab mit einem Mantelabschnitt in im Wesentlichen flächige Anlage gelangt, um die Eingriffskräfte besser zu verteilen, wodurch sich die Belastung in Grenzen hält. Eine Weiterbildung mit einem Gehäuse, das an einer ersten Stirnseite eine erste Öffnung und an einer der ersten Stirnseite gegenüberliegenden zweiten Stirnseite eine zweite Öffnung aufweist, wobei der erste Hohlkörper im Gehäuse zwischen dessen beiden Öffnungen fixiert ist, zeichnet sich dadurch aus, dass die Fläche an einer der beiden Gehäuseöffnungen ausgebildet ist.

Eine einstufige Wälzlagerung, die sich mit der erfindungsgemäßen Lösung realisieren lässt, sieht nur eine einzige sphärische Kugelbahn, die vom ersten Zwischenraum gebildet wird, vor, benötigt jedoch überwiegend mehr Platz bei entsprechend großen Schwenkwinkeln.

Es ist aber beispielsweise auch möglich, mithilfe der Erfindung ein zweistufiges Kaskadenlager zu realisieren, wonach gemäß einer bevorzugten Ausführung ein zweiter Hohlkörper vorgesehen ist, der an einer ersten Stirnseite eine erste Öffnung, an einer der ersten Stirnseite gegenüberliegenden zweiten Stirnseite eine zweite Öffnung und zwischen diesen beiden Öffnungen einen konkaven, in Bezug auf eine dritte Achse teilsphärischen Innenflächenabschnitt sowie einen konvexen, in Bezug auf die dritte Achse teilsphärischen Außenflächenabschnitt aufweist, wobei sowohl der teilsphärische Innenflächenabschnitt als auch der teilsphärische Außenflächenabschnitt des zweiten Hohlkörpers jeweils in Bezug auf eine quer zur dritten Achse aufgespannten dritten Symmetrieebene spiegelsymmetrisch ausgebildet ist, wobei die dritte Symmetrieebene gegenüber der zweiten Symmetrieebene um dieselbe gemeinsame Schnittlinie wie die erste Symmetrieebene gegenüber der zweiten Symmetrieebene und die dritte Achse gegenüber der zweiten Achse um denselben auf der Schnittlinie liegenden gemeinsamen Drehpunkt wie die erste Achse gegenüber der zweiten Achse verschwenkbar ist und der Mittelpunkt des teilsphärischen Innenflächenabschnittes des zweiten Hohlkörpers , zwischen dem teilsphärischen Außenflächenabschnitt des zweiten Hohlkörpers und dem teilsphärischen Innenflächenabschnitt des ersten Hohlkörpers der erste Zwischenraum und zwischen dem teilsphärischen Außenflächenabschnitt des Rotationskörpers und dem teilsphärischen Innenflächenabschnitt des zweiten Hohlkörpers ein zweiter Zwischenraum gebildet ist, im zweiten Zwischenraum Wälzkörper laufen und ein diese Wälzkörper aufnehmender zweiter Käfig angeordnet ist, benachbart zum zweiten Anschlag ein vierter Anschlag vorgesehen ist, an den gleichzeitig in der maximalen Schwenkstellung des Stabs der zweite Käfig oder mindestens ein benachbarter Wälzkörper in Anlage gelangt, und die Anordnung und Ausbildung der beiden Hohlkörper derart getroffen ist, dass in der maximalen Schwenkstellung des Stabs die Wälzkörper im Wesentlichen noch im zweiten Zwischenraum verbleiben.

Ein solches zweistufiges Kaskadenlager weist demnach zwei konzentrische sphärische Bahnen auf, von denen die innere sphärische Bahn vom ersten Zwischenraum und die äußere sphärische Bahn vom zweiten Zwischenraum gebildet wird. Der Vorteil einer solchen Ausführung liegt in kleineren Lagerabmessungen, wenn große Schwenkwinkel erzielt werden sollen oder die Druckangriffswinkel innerhalb der Lagerung für eine größere Lagertragfähigkeit optimiert werden sollen.

Bevorzugt fällt der Mittelpunkt des teilsphärischen Außenflächenabschnittes des zweiten Hohlkörpers mit dem Drehpunkt im Wesentlichen zusammen.

Alternativ ist aber auch denkbar, die Anordnung so zu treffen, dass der Mittelpunkt des teilsphärischen Innenflächenabschnittes des zweiten Hohlkörpers und der Mittelpunkt des teilsphärischen Außenflächenabschnittes des zweiten Hohlkörpers auf der vertikal gerichteten zweiten Achse voneinander beabstandet liegen.

Zur Erzielung einer kleineren Bauform ist es ferner von Vorteil, den vierten Anschlag im Bereich der benachbart zum zweiten Anschlag befindlichen Öffnung des zweiten Hohlkörpers vorzusehen und/oder am teilsphärischen Innenflächenabschnitt des zweiten Hohlkörpers benachbart zumindest einer seiner beiden Öffnungen auszubilden.

Ferner ist es zweckmäßig, am teilsphärischen Außenflächenabschnitt des zweiten Hohlkörpers benachbart zu mindestens einer seiner beiden Öffnungen einen fünften Anschlag auszubilden, an den in der maximalen Schwenkstellung des Stabs mindestens ein benachbarter Wälzkörper und/oder der erste Käfig in Anlage gelangt.

Vorzugsweise sind die Wälzkörper im zweiten Zwischenraum in zwei übereinanderliegenden Reihen angeordnet, was ebenfalls zur Erzielung einer kompakten Bauform von Vorteil ist.

Nachfolgend werden bevorzugte Ausführungsbeispiele der Erfindung anhand der beiliegenden Zeichnungen näher erläutert. Es zeigen:
- Fig. 1: im Querschnitt ein Wälzkörperpendellager gemäß einer ersten bevorzugten Ausführung der Erfindung mit geradestehendem Stab;
- Fig. 2: das Wälzkörperpendellager von Fig. 1 mit in eine maximale Schwenkstellung verschwenktem Stab;
- Fig. 3: im Querschnitt ein Wälzkörperpendellager gemäß einer zweiten bevorzugten Ausführung der Erfindung mit geradestehendem Stab;
- Fig. 4: das Wälzkörperpendellager von Fig. 3 mit in eine maximale Schwenkstellung verschwenktem Stab;
- Fig. 5: schematisch im Querschnitt eine Kreiselkompassanlage, in der ein Wälzkörperpendellager, beispielsweise gemäß den in den Figuren 1 bis 4 gezeigten Ausführungen, Verwendung findet; und
- Fig. 6: die Kreiselkompassanlage von Fig. 5 in einem Betriebszustand bei stärkerer Kränkung des Schiffes, in dem die Kreiselkompassanlage installiert ist.

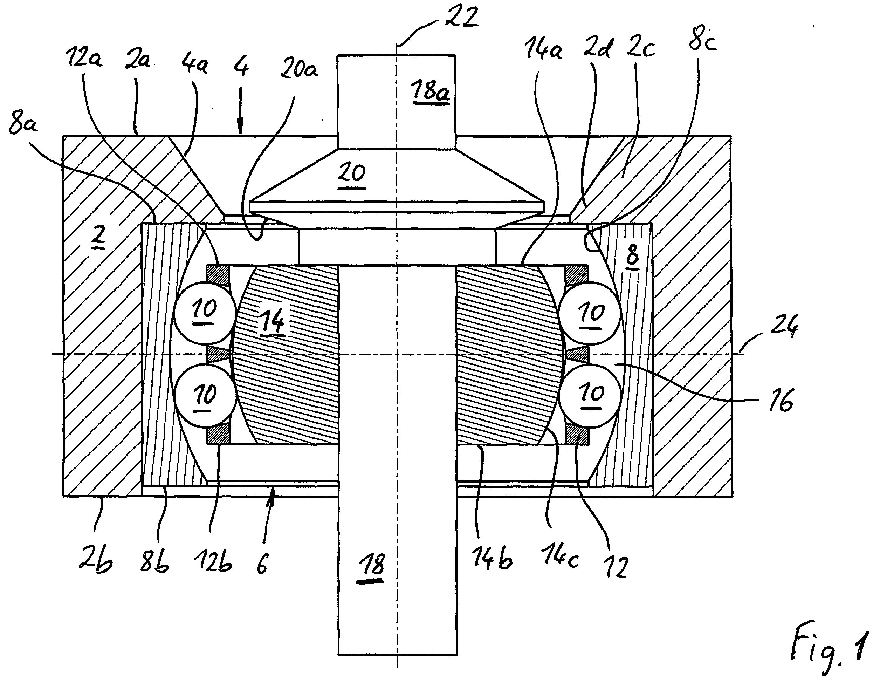

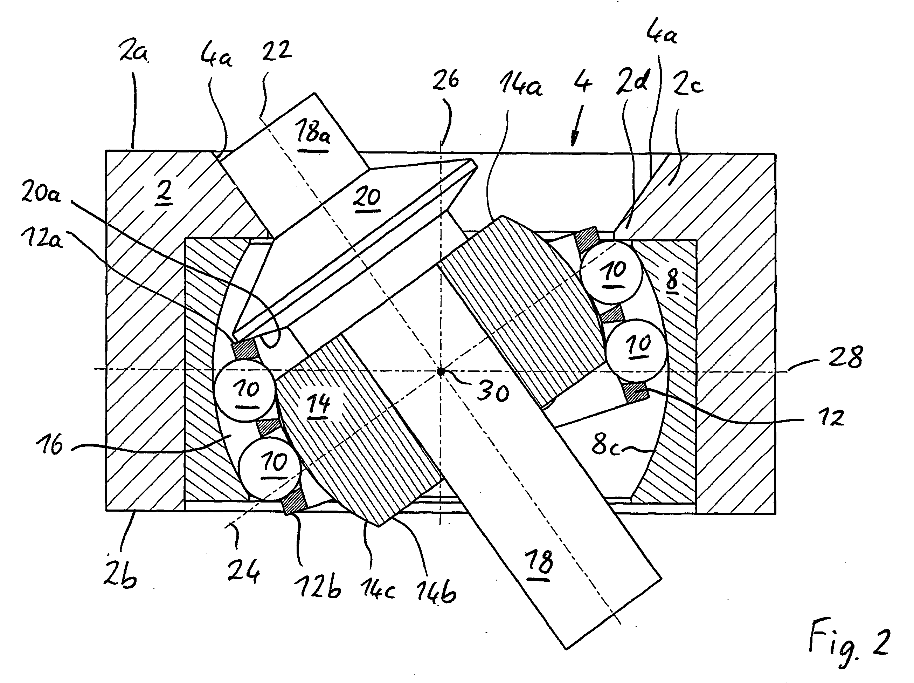

In den Figuren 1 und 2 ist im Querschnitt ein Wälzkörperpendellager gemäß einer ersten bevorzugten Ausführung gezeigt.

Das in den Figuren 1 und 2 dargestellte Wälzkörperpendellager weist ein außen liegendes Gehäuse 2 auf, in dessen (gemäß den Figuren 1 und 2 oberer) erster Stirnseite 2a eine erste Öffnung 4 und in dessen gegenüberliegender (gemäß den Figuren 1 und 2 unterer) zweiter Stirnseite 2b eine zweite Öffnung 6 ausgebildet ist. Wie die Fig. 1 und 2 ferner erkennen lassen, ist das Gehäuse 2 im Bereich der ersten Öffnung 4 mit einem nach innen ragenden flanschartigen Randabschnitt 2c versehen, dessen freies Ende 2d einen umlaufenden Steg bildet, von dem sich eine schräg nach außen geneigte, umlaufende Schrägfläche 4a zur ersten Stirnseite 2a des Gehäuses 2 erstreckt, wodurch die erste Öffnung 4 einen sich nach außen aufweitenden konischen Querschnitt erhält.

Das Gehäuse 2 weist einen Hohlraum auf, der zu den beiden Öffnungen 4, 6 hin geöffnet ist und einen ersten Ringkörper 8 enthält. Die Anordnung des Ringkörpers 8 im Hohlraum des Gehäuses 2 erfolgt im dargestellten Ausführungsbeispiel dadurch, dass der Ringkörper 8 durch die zweite Öffnung 6 eingeführt wird, bis er mit seiner (gemäß den Figuren 1 und 2 oberer) ersten Stirnseite 8a in Anlage an den flanschartigen Randabschnitt 2c des Gehäuses 2 gelangt. Wie Fig. 1 ferner erkennen lässt, ist im dargestellten Ausführungsbeispiel die axiale Länge bzw. Höhe des Ringkörpers 8 derart bemessen, dass dessen (gemäß den Figuren 1 und 2 untere) zweite Stirnseite 8b etwa in der von der zweiten Stirnseite 2b des Gehäuses 2 aufgespannten Ebene liegt. Somit wird die zweite Öffnung 6 von dem umlaufenden innen liegenden Rand an der zweiten Stirnseite 8b des Ringkörpers 8 begrenzt. Demgegenüber wird die erste Öffnung 4 im dargestellten Ausführungsbeispiel nicht vom Ringkörper 8 begrenzt, sondern von dem freien Ende 2d des flanschartigen Randabschnittes 2c des Gehäuses 2, da dieser die erste Stirnseite 8a des Ringkörpers 8 nach innen überragt.

Der Ringkörper 8 ist gegenüber dem ihn aufnehmenden Gehäuse 2 fixiert und an seiner Innenwandung mit einer konkaven teilsphärischen Innenfläche 8c versehen. Entlang dieser teilsphärischen Innenfläche 8c laufen als Wälzkörper vorgesehene Kugeln 10, die in einem ringförmigen Käfig 12 drehbar gelagert und im dargestellten Ausführungsbeispiel in zwei übereinanderliegenden Reihen angeordnet sind. Wie Fig. 1 ferner erkennen lässt, ist die axiale Länge bzw. Höhe des Käfigs 12, die zwischen seinen beiden Stirnseiten 12a und 12b definiert ist, kürzer als die axiale Länge bzw. Höhe des Ringkörpers 8 zwischen dessen Stirnseiten 8a und 8b. Der Käfig 12 umgibt einen teilkugelförmigen Rotationskörper 14, der zwei gegenüberliegende und parallel zueinander verlaufende ebene Stirnseiten 14a, 14b aufweist. Die axiale Länge bzw. Höhe des Rotationskörpers 14, die durch den Abstand zwischen dessen beiden Stirnseiten 14a, 14b definiert wird, ist im dargestellten Ausführungsbeispiel gleich der axialen Länge bzw. Höhe des Käfigs 12. Der Rotationskörper 14 ist an seiner Außenwandung mit einer konvexen teilsphärischen Außenfläche 14c versehen, an der sich die Kugeln 10 ebenfalls abstützen. Wie Fig. 1 ferner erkennen lässt, verlaufen die teilsphärische Innenfläche 8c des Ringkörpers 8 und die teilsphärische Außenfläche 14c des Rotationskörpers 14 parallel zueinander und bilden zwischen sich eine sphärische Kugelbahn 16, in der die Kugeln 10 entlanglaufen.

Wie Fig. 1 ferner erkennen lässt, erstreckt sich durch den Rotationskörper 14 ein zylindrischer Stab 18, der im Bereich der ersten Öffnung 4 mit einem umlaufenden und radial nach außen ragenden, teller- bzw. scheibenförmigen Kragen 20 versehen ist. Der Rundstab 18 ist am Rotationskörper 14 gegenüber diesen orts- und drehfest fixiert und bildet somit im dargestellten Ausführungsbeispiel eine bauliche Einheit mit dem Rotationskörper 14. Deswegen kann der Rotationskörper 14 alternativ auch zusammen mit dem Rundstab 18 als ein gemeinsamer Rotationskörper definiert werden. Der Rotationskörper 14 und der Rundstab18 können wahlweise verschiedene Bauteile bilden oder auch einstückig miteinander verbunden sein.

Das beschriebene Wälzkörperpendellager ermöglicht eine dreidimensionale Lagerung dergestalt, dass der Stab 18 zusammen mit dem Rotationskörper 14 von einer in Fig. 1 gezeigten geraden Stellung in eine in Fig. 2 gezeigte maximale Schwenkstellung schwenken und dabei gleichzeitig noch eine Drehbewegung winklig bzw. quer zur Schwenkbewegung ausführen kann. Bei Bedarf ist die Einheit aus Rotationskörper 14 und Stab 18 zusätzlich noch um eine erste Achse 22 drehbar, die die Längs- bzw. Mittelachse des Stabs 18 bildet. Diese erste Achse 22 bildet gleichzeitig die Mittel- bzw. Rotationsachse für den teilkugelförmigen Rotationskörper 14, dessen konvexe teilsphärische Außenfläche 14c sowohl rotationssymmetrisch in Bezug auf die erste Achse 22 als auch spiegelsymmetrisch in Bezug auf eine quer zur ersten Achse 22 aufgespannte erste Symmetrieebene 24 (Fig. 2) ausgebildet ist. Die konkave teilsphärische Innenfläche 8c ist rotationssymmetrisch in Bezug auf eine zweite Achse 26 sowie gleichzeitig spiegelsymmetrisch in Bezug auf eine quer zur zweiten Achse 26 aufgespannte zweite Symmetrieebene 28 ausgebildet, wie insbesondere Fig. 2 erkennen lässt. Ferner ist die Anordnung so getroffen, dass sich die erste Achse 22 und die zweite Achse 26 in einem gemeinsamen Schnittpunkt 30 schneiden, der nicht nur einen Drehpunkt für die erste Achse 22, sondern auch den Mittelpunkt der teilsphärischen Außenfläche 14c des Rotationskörpers 14 und den Mittelpunkt der teilsphärischen Innenfläche 8c des Ringkörpers 8 bildet. Ferner liegt dieser Schnittpunkt 30 auf einer rechtwinklig zur Betrachtungsebene der Figuren 1 und 2 verlaufenden und in den Figuren 1 und 2 nicht näher bezeichneten Linie, die für die erste Symmetrieebene 24 und die zweite Symmetrieebene 28 eine gemeinsame Schnittlinie bildet, in der sich diese beiden Symmetrieebenen schneiden. Wegen der Verschwenkbarkeit des Stabes 18 und somit des Rotationskörpers 14, ist die erste Achse 22 um den Schnittpunkt 30 gegenüber der zweiten Achse 26 und folglich auch in gleicher Weise die erste Symmetrieebene 24 gegenüber der zweiten Symmetrieebene 28 um die erwähnte Schnittlinie, auf der der Schnittpunkt 30 liegt, verschwenkbar, während die zweite Achse 26 und die zweite Symmetrieebene 28 in Bezug auf den Einbauort ortsfest sind. Die Einheit aus Rotationskörper 14 und Stab 18 kann nicht nur um die erwähnte Schnittlinie und somit den darauf liegenden Schnittpunkt 30 eine Schwenkbewegung, sondern gleichzeitig auch um die zweite Achse 26 eine Rotationsbewegung ausführen, wobei während einer solchen Rotationsbewegung die erwähnte Schnittlinie, die in der Darstellung von Fig. 1 ja rechtwinklig zur Betrachtungsebene verläuft, um den Schnittpunkt 30 in der zweiten Symmetrieebene 28 rotiert. An dieser Stelle sei ergänzend noch angemerkt, dass, wie Fig. 1 ferner erkennen lässt, auch die die erste Öffnung 4 begrenzende, umlaufende Fläche 4a in Bezug auf die zweite Achse 26 rotationssymmetrisch ausgebildet ist.

In Fig. 2 ist die Einheit aus Rotationskörper 14 und Stab 18 in der maximalen Schwenkstellung gezeigt, wobei gegenüber der Darstellung von Fig. 2 die Einheit aus Rotationskörper 14 und Stab 18 selbstverständlich auch wahlweise zur anderen Seite schwenken kann. Wie Fig. 2 ferner erkennen lässt, wird die maximale Schwenkstellung dadurch begrenzt, dass im dargestellten Ausführungsbeispiel zum einen der Stab 18 mit seinem zylindrischen Abschnitt 18a in Anlage an die die erste Öffnung 4 begrenzende Schrägfläche 4a am flanschartigen Randabschnitt 2c des Gehäuses 2, der am Stab 18 ausgebildete Kragen 20 mit seiner zum Rotationskörper 14 gerichteten Randfläche 20a in Anlage an die Stirnseite 12a des Käfigs 12 und mindestens eine in dieser Schwenkstellung zur ersten Öffnung 4 nächstliegenden Kugel 10 in Anlage an das freie Ende 2d des flanschartigen Randabschnittes 2c des Gehäuses 2 gelangt. Somit bilden jeweils gemeinsam der Abschnitt 18a des Stabes 18 und die Schrägfläche 4a am flanschartigen Randabschnitt 2c des Gehäuses 2, der Kragen 20 am Stab 18 und der Käfig 12 mit seiner ersten Stirnseite 12a sowie die der ersten Öffnung 4 jeweils nächstliegenden Kugeln 10 und das freie Ende 2d des flanschartigen Randabschnittes 2c am Gehäuse 2 einen Anschlag zur Begrenzung der Schwenkbewegung des Stabes 18 und somit des Rotationskörpers 14 auf eine maximale Auslenkung, wie sie in Fig. 2 gezeigt ist. Damit der Kragen 20 während der Schwenkbewegung nicht mit dem freien Ende 2d des flanschartigen Randabschnittes 2c am Gehäuse 2 kollidiert, jedoch für eine stabile Bauausführung der vorhandene Platz im Wesentlichen ausgenutzt wird, ohne dass dadurch die freie Beweglichkeit des Stabes 18 mit dem Kragen 20 im Bereich der ersten Öffnung 4 eingeschränkt wird, ist der Durchmesser des Kragens 20 entsprechend zu bemessen und hat der Kragen 20 im Querschnitt eine flache konische Form, wie die Figuren 1 und 2 erkennen lassen.

Bei der zuvor anhand der Figuren 1 und 2 beschriebenen ersten Ausführung handelt es sich um eine einstufige Wälzlagerung, die mit der Kugelbahn 16 nur eine einzige sphärische Kugelbahn aufweist.

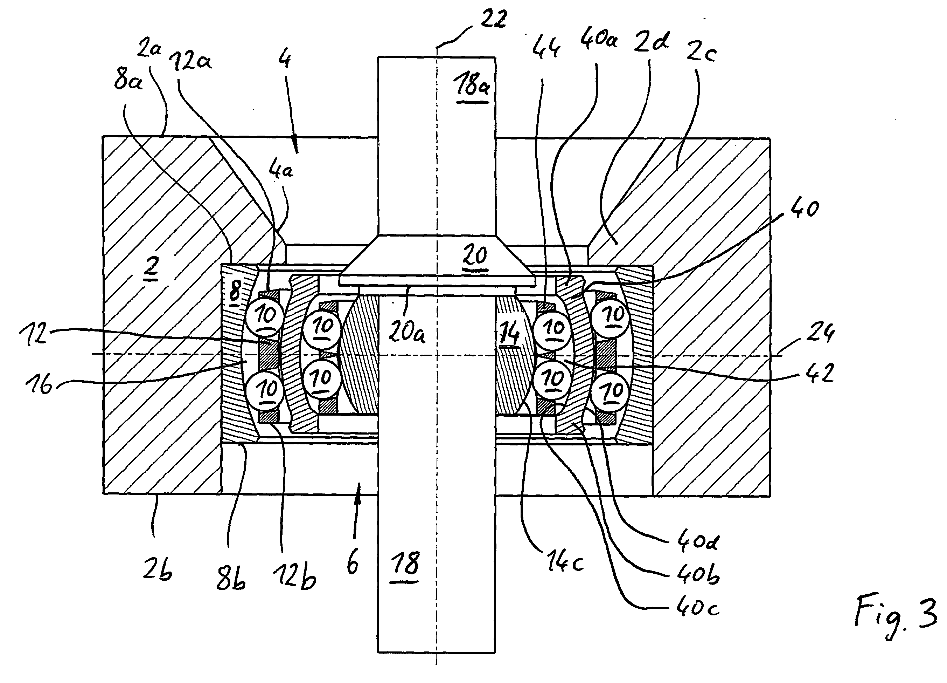

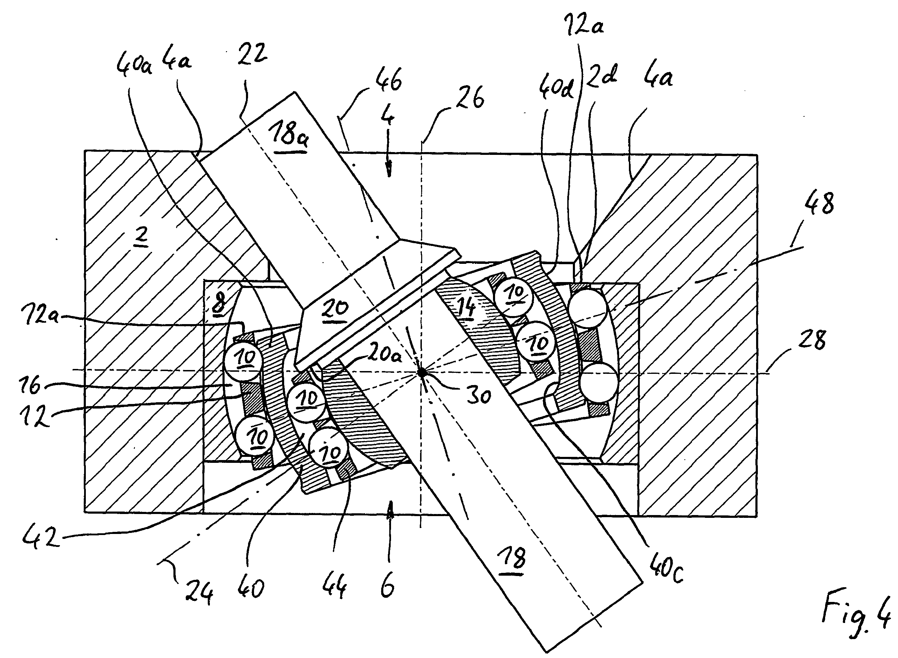

In den Figuren 3 und 4 ist ein Wälzkörperpendellager gemäß einer zweiten bevorzugten Ausführung dargestellt, bei welcher es sich um ein zweistufiges Kaskadenlager handelt, die mit zwei konzentrisch zueinander angeordneten sphärischen Kugelbahnen versehen ist.

Die zweite Ausführung gemäß den Figuren 3 und 4 unterscheidet sich von der ersten Ausführung gemäß den Figuren 1 und 2 dadurch, dass zwischen der teilsphärischen Innenfläche 8c des ersten Ringkörpers 8 und der teilsphärischen Außenfläche 14c des Rotationskörpers 14 ein zweiter Ringkörper 40 angeordnet ist. Dieser zweite Ringkörper 40 ist an seiner (gemäß den Figuren 3 und 4 oberen) ersten Stirnseite mit einem beiderseits radial auskragenden Rand 40a und an seiner gegenüberliegenden (gemäß den Figuren 3 und 4 unteren) zweiten Stirnseite gleichermaßen mit einem beiderseits radial auskragenden Rand 40b versehen. Ferner ist an der Innenwandung des zweiten Ringkörpers 40 eine konkave teilsphärische Innenfläche 40c und an der Außenwandung eine konvexe teilsphärische Außenfläche 40d ausgebildet. Dabei wird jeweils die teilsphärische Innenfläche 40c und die teilsphärische Außenfläche 40d von den beiden auskragenden Rändern 40a, 40b begrenzt. Wie insbesondere Fig. 3 ferner erkennen lässt, verlaufen die teilsphärische Innenfläche 40c und die teilsphärische Außenfläche 40d des zweiten Ringkörpers 40 konzentrisch zur teilsphärischen Innenfläche 8c des ersten Ringkörpers 8 und der teilsphärischen Außenfläche 14c des Ringkörpers 14 und ist die axiale Höhe bzw. Länge des zweiten Ringkörpers 40, die durch den Abstand zwischen seinen beiden Stirnseiten definiert wird, nur geringfügig kürzer als die axiale Höhe bzw. Länge des ersten Ringkörpers 8 bemessen. Während zwischen der teilsphärischen Innenfläche 8c des ersten Ringkörpers 8 und der teilsphärischen Außenfläche 40d des zweiten Ringkörpers 40 die bereits aus der ersten Ausführung bekannte teilsphärische Kugelbahn 16 gebildet wird, die den ersten Käfig 12 mit den Kugeln 10 aufnimmt, wird bei der zweiten Ausführung gemäß den Figuren 3 und 4 zusätzlich zwischen der teilsphärischen Innenfläche 40c des zweiten Ringkörpers 40 und der teilsphärischen Außenfläche 14c des Rotationskörpers 14 eine zweite teilsphärische Kugelbahn 42 gebildet, in der weitere Kugeln 10 laufen, die in einem zweiten Käfig 44 drehbar gelagert sind. Wie in der ersten teilsphärischen Kugelbahn 16 sind auch in der zweiten teilsphärischen Kugelbahn 42 die Kugeln 10 in zwei übereinanderliegenden Reihen angeordnet.

Wie Fig. 4 ferner erkennen lässt, sind am zweiten Ringkörper 40 die teilsphärische Innenfläche 40c und die teilsphärische Außenfläche 40d gleichermaßen sowohl rotationssymmetrisch in Bezug auf eine dritte Achse 46 als auch spiegelsymmetrisch in Bezug auf eine quer zur dritten Achse 46 aufgespannten dritten Symmetrieebene 48 ausgebildet. Dabei läuft auch die dritte Achse 46 durch den gemeinsamen Schnittpunkt 30, der zugleich auch den Mittelpunkt der teilsphärischen Innenfläche 40c und der teilsphärischen Außenfläche 40d des zweiten Ringkörpers 40 bildet. Ebenfalls schneidet auch die dritte Symmetrieebene 48 die beiden anderen Symmetrieebenen 24 und 28 in der gemeinsamen Schnittlinie, die in der Darstellung von Fig. 4 rechtwinklig zur Bildbetrachtungsebene verläuft und auf der der gemeinsame Schnittpunkt 30 liegt. Somit ist auch die dritte Achse 46 um den Schnittpunkt 30 gegenüber der ortsfesten zweiten Achse 26 und die dritte Symmetrieebene 48 um die erwähnte Schnittlinie gegenüber der ortsfesten zweiten Symmetrieebene 28 verschwenkbar.

Fig. 4 zeigt den Stab 18 in der gleichen maximalen Schwenkstellung wie Fig. 2. Wie ein Vergleich dieser beiden Figuren erkennen lässt, wird auch bei der zweiten Ausführung die Schwenkbewegung durch die Schrägfläche 4a am flanschartigen Randabschnitt 2c des Gehäuses 2 begrenzt, indem der Stab 18 mit seinem Abschnitt 18a gegen diese Schrägfläche 4a stößt. Ähnlich wie bei der ersten Ausführung gelangt dabei der Kragen 20 am Stab 18 in Anlage an die erste Stirnseite eines Käfigs, wobei es sich hier um den zweiten Käfig 44 handelt. Anders als bei der ersten Ausführung gelangt in der maximalen Schwenkstellung nicht mindestens eine benachbart zur ersten Öffnung 4 befindliche Kugel, sondern der erste Käfig 12 mit seiner benachbart zur ersten Öffnung 4 befindlichen Stirnseite in Anlage an das freie Ende 2d des am Gehäuse 2 ausgebildeten flanschartigen Randabschnittes 2c. Wie Fig. 4 ferner erkennen lässt, bilden außerdem die beiden auskragenden Ränder 40a und 40b an den Stirnseiten des zweiten Ringkörpers 40 weitere Anschläge für die Kugeln 10, begrenzen somit deren Weg und verhindern zugleich einen unbeabsichtigten Austritt der jeweiligen Kugel aus der jeweiligen Kugelbahn 16, 42.

Wie schließlich noch ein Vergleich zwischen den Figuren 2 und 4 erkennen lässt, haben bei der zweiten Ausführung die beiden Ringkörper 8, 40, die beiden Käfige 12, 44 und der den Stab 18 tragende Rotationskörper 14 jeweils eine geringere Bauform als der Ringkörper 8, der Käfig 12 und der Rotationskörper 14 der ersten Ausführung.

Hinsichtlich der übrigen bei der zweiten Ausführung verwendeten Bauteile, die von der ersten Ausführung übernommen sind, wird zur Vermeidung von Wiederholungen auf die anhand von Fig. 1 getroffene Beschreibung der ersten Ausführung verwiesen.

An dieser Stelle sei noch anzumerken, dass bei den beiden zuvor beschriebenen Ausführungsbeispielen der bzw. die Ringkörper und der bzw. die Käfige jeweils ein einstückiges und somit ungeteiltes Bauteil bilden, so dass die teilsphärischen Flächen an diesen Bauteilen als ungeteilte Lagerflächen ausgeführt sind. Ferner erfolgt eine Positionierung der Kugeln 10 durch den zugehörigen Käfig nicht in Richtung des den Lagermittelpunkt bildenden Schnittpunktes 30, sondern nur in Richtung der teilsphärischen Flächen und somit in Laufflächenrichtung.

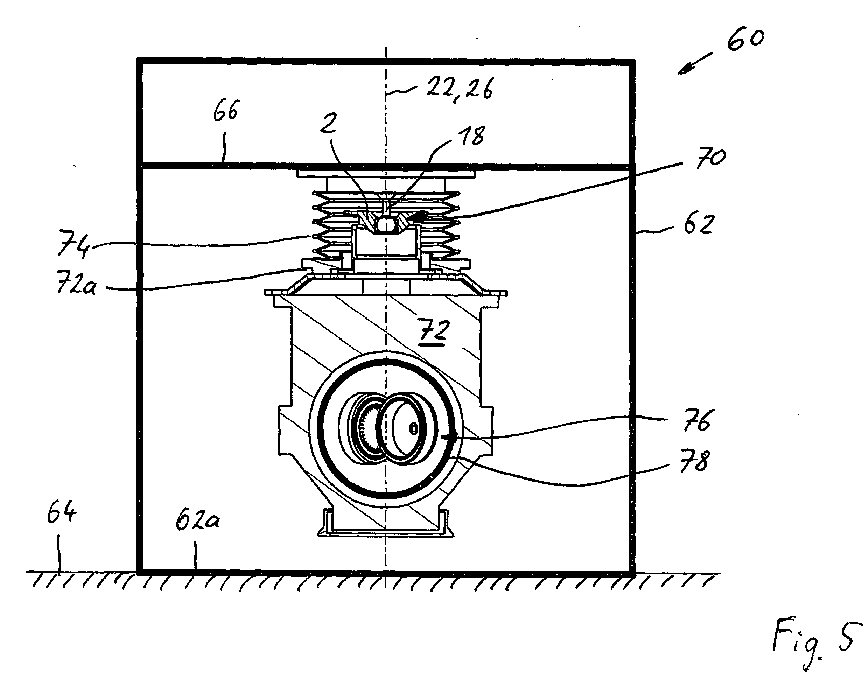

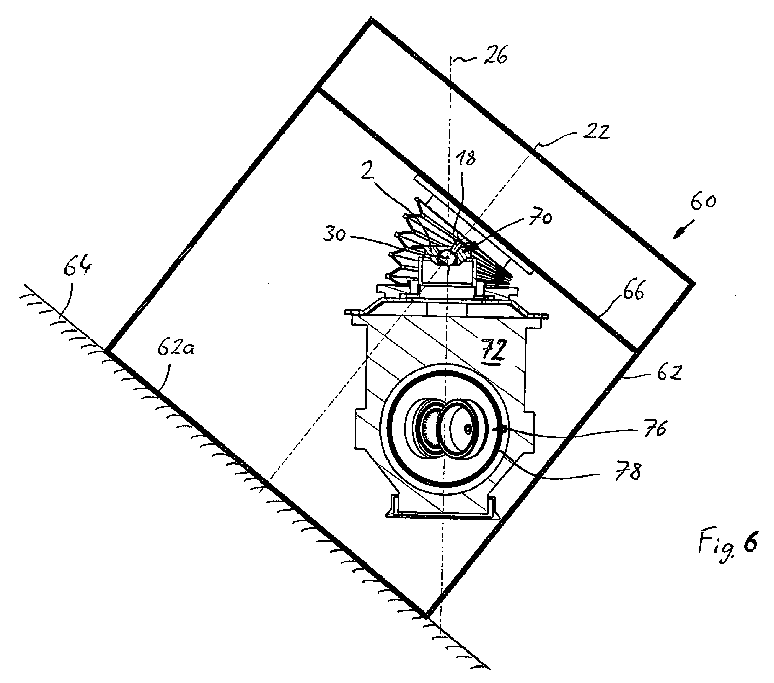

Wie bereits eingangs angesprochen, findet das beschriebene Wälzkörperpendellager bevorzugt Verwendung in Kreiselkompassanlagen, die hauptsächlich auf Schiffen eingesetzt werden. Eine solche Kreiselkompassanlage ist zum besseren Verständnis schematisch im Querschnitt in den Figuren 5 und 6 gezeigt. Die dort schematisch im Querschnitt dargestellte Kreiselkompassanlage 60 weist ein Gehäuse 62 auf, in der sämtliche Komponenten geschützt untergebracht sind. Die Kreiselkompassanlage 60 ist mit ihrem Gehäuse 62 in einem Fahrzeug fest montiert, bei dem es sich beispielsweise um ein Schiff handeln kann. Schematisch ist in Fig. 5 mit dem Bezugszeichen "64" ein Schiffsdeck angedeutet, auf dem das Gehäuse 62 der Kreiselkompassanlage 60 mit seinem Boden 62a fest montiert ist. An einem Träger 66 innerhalb des Gehäuses 62 ist der erwähnte Rundstab 18 so befestigt, dass er nach unten ragt und gegenüber dem Träger 66 und dem Gehäuse 62 und somit auch dem in Fig. 5 schematisch dargestellten Schiffsdeck 64 ortsfest angeordnet ist. In der waagerechten und somit ungekränkten Schwimmlage des Schiffes, was in Fig. 5 durch eine waagerechte Ausrichtung des schematisch angedeuteten Schiffsdecks 64 zum Ausdruck kommt, erstreckt sich der Rundstab 18 in vertikaler Richtung, so dass die die Längs- bzw. Mittelachse des Rundstabes 18 bildende erste Achse 22 mit der zweiten Achse 26 (vgl. hierzu insbesondere die Figuren 1 und 2) und somit mit der Erdvertikalen zusammenfällt. Neben dem Rundstab 18 ist in Fig. 5 auch noch das Gehäuse 2 erkennbar dargestellt, das wie der Rundstab 18 zu dem zuvor im Einzelnen beschriebenen Wälzkörperpendellager gehört, das in Fig. 5 insgesamt mit dem Bezugszeichen "70" bezeichnet ist. Am Gehäuse 2 hängt eine sog. Pendeleinheit 72, die gegenüber dem Gehäuse 2 ortsfest an diesem befestigt ist. Das Wälzkörperpendellager 70 bildet somit eine gelenkige Verbindung der Pendeleinheit 72 mit dem Träger 66. Zum Schutz dieser gelenkigen Verbindung ist im dargestellten Ausführungsbeispiel ein Faltenbalg 74 vorgesehen, der das Wälzkörperpendellager 70 und weitere dargestellte, jedoch nicht näher erläuterte Komponenten umgibt und zwischen dem Träger 66 und der Oberseite 72a der Pendeleinheit 72 angeordnet ist. Die Pendeleinheit 72 enthält ein Kreiselsystem 76, das von einer Hüllkugel 78 umschlossen ist. Somit dient die Pendeleinheit 72 auch als Gehäuse für das Kreiselsystem 76.

Da das Gehäuse 2 des Wälzkörperpendellagers 70, an dem die Pendeleinheit 72 hängt, gegenüber dem Stab 18, der gegenüber dem Träger 66 ortsfest angeordnet und dessen Achse rechtwinklig zum Schiffsdeck 64 verläuft, dreh- und schwenkbar ist, bleibt unabhängig vom Krängungszustand des Schiffes die Pendeleinheit 72 stets in vertikaler Ausrichtung, wie Fig. 6 erkennen lässt. Denn in Fig. 6 ist ein Zustand gezeigt, in der sich das Schiff in einem gegenüber der Erdhorizontalen gekrängten Zustand befindet. Dies hat zur Folge, dass durch die Krängung des Schiffsdecks 64 auch das Gehäuse 62 in eine geneigte Stellung gelangt und dadurch der Stab 18 mit seiner von der ersten Achse 22 gebildeten Längs- bzw. Mittelachse aus der Erdvertikalen im dargestellten Ausführungsbeispiel um einen vom Schnittpunkt 30 (Fig. 2) gebildeten Drehpunkt ausgelenkt wird. Da die Pendeleinheit 72 ein Pendelgewicht bildet, verbleibt die Pendeleinheit 72 und somit das Kreiselsystem 76 in der ursprünglichen vertikalen Ausrichtung, wie Fig. 6 erkennen lässt. Fig. 6 zeigt die Kreiselkompassanlage 60 in der maximalen Schwenkstellung vergleichbar mit der in den Figuren 2 und 4 gezeigten maximalen Schwenkstellung, die jedoch in der Praxis gewöhnlich nicht erreicht wird. In diesem Zusammenhang sei aus Gründen des besseren Verständnisses darauf hingewiesen, dass die Darstellung der Figuren 2 und 4 den Eindruck erwecken, als ob der Stab 18 gegenüber dem Gehäuse 2 eine Schwenkbewegung ausführt, was selbstverständlich grundsätzlich möglich ist, jedoch in der in den Figuren 5 und 6 gezeigten Konfiguration das Gehäuse 2 des Wälzkörperpendellagers 70 eine Schwenkbewegung gegenüber dem Stab 18 ausführt.

## Patentansprüche

1. Wälzkörperpendellager, insbesondere zur Lagerung von Kreiselsystemen eines Kreiselkompasses, mit
- einem Rotationskörper (14, 18) mit einem konvexen, in Bezug auf eine erste Achse (22) teilsphärischen Außenflächenabschnitt (14c), der in Bezug auf eine im Wesentlichen quer zur ersten Achse (22) aufgespannte erste Symmetrieebene (24) spiegelsymmetrisch ausgebildet ist,
- einem ersten Hohlkörper (8) mit einem den Rotationskörper (14, 18) im Bereich seines teilsphärischen Außenflächenabschnittes (14c) aufnehmenden ersten Hohlraum, der an einer ersten Stirnseite (8a) eine erste Öffnung (4), an einer der ersten Stirnseite (8a) gegenüberliegenden zweiten Stirnseite (8b) eine zweite Öffnung (6) und zwischen diesen beiden Öffnungen (4, 6) einen konkaven, in Bezug auf eine zweite Achse (26) teilsphärischen Innenflächenabschnitt (8c) aufweist, der in Bezug auf eine im Wesentlichen quer zur zweiten Achse (26) aufgespannte zweite Symmetrieebene (28) spiegelsymmetrisch ausgebildet ist, wobei die erste Symmetrieebene (24) und die zweite Symmetrieebene (28) um eine gemeinsame Schnittlinie und die erste Achse (22) und die zweite Achse (26) um einen im Wesentlichen auf der Schnittlinie liegenden gemeinsamen Drehpunkt (30) gegeneinander verschwenkbar sind, der Mittelpunkt des teilsphärischen Außenflächenabschnittes (14c) des Rotationskörpers (14), der Mittelpunkt des teilsphärischen Innenflächenabschnittes (8c) des ersten Hohlkörpers (8) und der Drehpunkt (30) im Wesentlichen zusammenfallen und zwischen dem teilsphärischen Außenflächenabschnitt (14c) des Rotationskörpers (14) und dem teilsphärischen Innenflächenabschnitt (8c) des ersten Hohlkörpers (8) ein erster Zwischenraum (16) gebildet ist,
- im ersten Zwischenraum (16) laufenden Wälzkörpern (10),
- einem im ersten Zwischenraum (16) angeordneten und die Wälzkörper (10) aufnehmenden ersten Käfig (12), und
- einem ersten Anschlag (2d), an den in einer maximalen Schwenkstellung des Rotationskörpers (14, 18) der erste Käfig (12) oder mindestens ein benachbarter Wälzkörper (10) in Anlage gelangt,
- wobei die Anordnung und Ausbildung des Rotationskörpers (14, 18), des ersten Hohlkörpers (8), der Wälzkörper (10) und des ersten Käfigs (12) derart getroffen ist, dass in der maximalen Schwenkstellung des Rotationskörpers (14, 18) die Wälzkörper (10) im Wesentlichen noch im ersten Zwischenraum (16) verbleiben,
**gekennzeichnet durch**
- einen im Bereich benachbart zum ersten Anschlag (2d) am Rotationskörper (14, 18) vorgesehenen zweiten Anschlag (20), der gegen den ersten Käfig (12) und/oder mindestens einen benachbarten Wälzkörper (10) gleichzeitig stößt, wenn sich der Rotationskörper (14, 18) in der maximalen Schwenkstellung gegenüber der zweiten Achse (26) befindet.

2. Wälzkörperpendellager nach Anspruch 1, **dadurch gekennzeichnet, dass** der zweite Anschlag (20) ausgebildet ist, in Anlage an eine Stirnseite (12a) des ersten Käfigs (12) zu gelangen.

3. Wälzkörperpendellager nach Anspruch 1 oder 2, **dadurch gekennzeichnet, dass** der erste Anschlag (2d) derart ausgebildet ist, dass nur die zu ihm benachbarten Wälzkörper (10) in Anlage an den ersten Anschlag (2d) bringbar sind.

4. Wälzkörperpendellager nach mindestens einem der vorangegangenen Ansprüche,
**dadurch gekennzeichnet, dass** der erste Anschlag (2d) den teilsphärischen Innenflächenabschnitt (8c) des ersten Hohlkörpers (8) begrenzt.

5. Wälzkörperpendellager nach mindestens einem der vorangegangenen Ansprüche,
**dadurch gekennzeichnet, dass** der erste Anschlag (2d) im Bereich der benachbart zum zweiten Anschlag (20) befindlichen Öffnung (4) des ersten Hohlkörpers (8) vorgesehen ist.

6. Wälzkörperpendellager nach Anspruch 5,
**dadurch gekennzeichnet, dass** der erste Anschlag (2d) als ein in die Öffnung (4) ragender, vorzugsweise im Wesentlichen vollständig umlaufender, Steg ausgebildet ist.

7. Wälzkörperpendellager nach mindestens einem der vorangegangenen Ansprüche,
**dadurch gekennzeichnet, dass** die axiale Länge des teilsphärischen Außenflächenabschnittes (14c) im Wesentlichen gleich der axialen Länge des Käfigs (12) ist.

8. Wälzkörperpendellager nach mindestens einem der vorangegangenen Ansprüche,
**dadurch gekennzeichnet, dass** die Wälzkörper (10) im ersten Zwischenraum (16) in zwei übereinanderliegenden Reihen angeordnet sind.

9. Wälzkörperpendellager nach mindestens einem der vorangegangenen Ansprüche, **dadurch gekennzeichnet, dass** die Wälzkörper (10) als Kugeln ausgebildet sind.

10. Wälzkörperpendellager nach mindestens einem der vorangegangenen Ansprüche, **dadurch gekennzeichnet, dass** der Rotationskörper (14, 18) einen Stab (18) aufweist, dessen Längsachse im Wesentlichen mit der ersten Achse (22) zusammenfällt.

11. Wälzkörperpendellager nach Anspruch10, **dadurch gekennzeichnet, dass** der zweite Anschlag (20) am Stab (18) angeordnet und als den Stab (18) umgebender und von diesem abstehender Kragen (20) ausgebildet ist.

12. Wälzkörperpendellager nach Anspruch 10 oder 11,
**gekennzeichnet durch** einen stationär bzw. raumfest angeordneten dritten Anschlag (4a), der so ausgebildet ist, dass der Stab (18) in seiner maximalen Schwenkstellung am dritten Anschlag (4a) anliegt.

13. Wälzkörperpendellager nach Anspruch 12,
**dadurch gekennzeichnet, dass** der dritte Anschlag (4a) eine gegenüber der zweiten Achse (26) geneigte Fläche aufweist, an die der Stab (18) mit einem Mantelabschnitt (18a) in Anlage gelangt.

14. Wälzkörperpendellager nach Anspruch 13, mit einem Gehäuse (2), das an einer ersten Stirnseite (2a) eine erste Öffnung (4) und an einer der ersten Stirnseite (2a) gegenüberliegenden zweiten Stirnseite (2b)eine zweite Öffnung (6) aufweist, wobei der erste Hohlkörper (8) im Gehäuse (2) zwischen dessen beiden Öffnungen (4, 6) fixiert ist,
**dadurch gekennzeichnet, dass** die Fläche des dritten Anschlages (4a) an einer der beiden Gehäuseöffnungen (4) ausgebildet ist.

15. Wälzkörperpendellager nach mindestens einem der vorangegangenen Ansprüche,
**dadurch gekennzeichnet, dass**
- ein zweiter Hohlkörper (40) vorgesehen ist, der an einer ersten Stirnseite eine erste Öffnung, an einer der ersten Stirnseite gegenüberliegenden zweiten Stirnseite eine zweite Öffnung und zwischen diesen beiden Öffnungen einen konkaven, in Bezug auf eine dritte Achse (46) teilsphärischen Innenflächenabschnitt (40c) sowie einen konvexen, in Bezug auf die dritte Achse (46) teilsphärischen Außenflächenabschnitt (40d) aufweist, wobei sowohl der teilsphärische Innenflächenabschnitt (40c) als auch der teilsphärische Außenflächenabschnitt (40d) des zweiten Hohlkörpers (40) jeweils in Bezug auf eine quer zur dritten Achse (46) aufgespannten dritten Symmetrieebene (48) spiegelsymmetrisch ausgebildet ist, wobei die dritte Symmetrieebene (48) gegenüber der zweiten Symmetrieebene (28) um dieselbe gemeinsame Schnittlinie wie die erste Symmetrieebene (24) gegenüber der zweiten Symmetrieebene (28) und die dritte Achse (46) gegenüber der zweiten Achse (26) im Wesentlichen um denselben auf der Schnittlinie liegenden gemeinsamen Drehpunkt (30) wie die erste Achse (22) gegenüber der zweiten Achse (26) verschwenkbar ist,
- zwischen dem teilsphärischen Außenflächenabschnitt (40d) des zweiten Hohlkörpers (40) und dem teilsphärischen Innenflächenabschnitt (8c) des ersten Hohlkörpers (8) der erste Zwischenraum (16) und zwischen dem teilsphärischen Außenflächenabschnitt (14c) des Rotationskörpers (14, 18) und dem teilsphärischen Innenflächenabschnitt (40c) des zweiten Hohlkörpers (40) ein zweiter Zwischenraum (42) gebildet ist,
- im zweiten Zwischenraum (42) Wälzkörper (10) laufen und ein diese Wälzkörper (10) aufnehmender zweiter Käfig (44) angeordnet ist,
- benachbart zum zweiten Anschlag (20) ein vierter Anschlag (40a) vorgesehen ist, an den gleichzeitig in der maximalen Schwenkstellung des Stabs (18) der zweite Käfig (44) oder mindestens ein benachbarter Wälzkörper (10) in Anlage gelangt, und
- die Anordnung und Ausbildung der beiden Hohlkörper (8, 40) derart getroffen ist, dass in der maximalen Schwenkstellung des Rotationskörpers (14, 18) die Wälzkörper (10) im Wesentlichen noch im zweiten Zwischenraum (42) verbleiben.

16. Wälzkörperpendellager nach Anspruch 15,
**dadurch gekennzeichnet, dass** der Mittelpunkt des teilsphärischen Innenflächenabschnittes (40c) des zweiten Hohlkörpers (40) und der Mittelpunkt des teilsphärischen Außenflächenabschnittes (40d) des zweiten Hohlkörpers (40) mit dem Drehpunkt (30) im Wesentlichen zusammenfallen.

17. Wälzkörperpendellager nach Anspruch 15,
**dadurch gekennzeichnet, dass** der Mittelpunkt des teilsphärischen Innenflächenabschnittes (40c) des zweiten Hohlkörpers (40) und der Mittelpunkt des teilsphärischen Außenflächenabschnittes (40d) des zweiten Hohlkörpers (40) voneinander beabstandet auf der zweiten Achse (26) liegen.

18. Wälzkörperpendellager nach mindestens einem der Ansprüche 15 bis 17, **dadurch gekennzeichnet, dass** der vierte Anschlag (40a) im Bereich der benachbart zum ersten Anschlag (20) befindlichen Öffnung des zweiten Hohlkörpers (40) vorgesehen ist.

19. Wälzkörperpendellager nach mindestens einem der Ansprüche 15 bis 18, **dadurch gekennzeichnet, dass** der vierte Anschlag (40a) am teilsphärischen Innenflächenabschnitt (40c) des zweiten Hohlkörpers (40) benachbart zu mindestens einer seiner beiden Öffnungen ausgebildet ist.

20. Wälzkörperpendellager nach mindestens einem der Ansprüche 15 bis 19, **dadurch gekennzeichnet, dass** am teilsphärischen Außenflächenabschnitt (40d) des zweiten Hohlkörpers (40) benachbart zu mindestens einer seiner beiden Öffnungen ein fünfter Anschlag (40b) ausgebildet ist, an den in der maximalen Schwenkstellung des Stabs (18) mindestens ein benachbarter Wälzkörper (10) und/oder der erste Käfig (12) in Anlage gelangt.

21. Wälzkörperpendellager nach mindestens einem der Ansprüche 15 bis 20, **dadurch gekennzeichnet, dass** die Wälzkörper (10) im zweiten Zwischenraum (42) in zwei übereinanderliegenden Reihen angeordnet sind.

22. Kreiselkompassvorrichtung mit einer Pendeleinheit (72), die ein drehbar gelagertes Kreiselsystem (76) aufweist, und einem Pendellager, an dem die Pendeleinheit (72) als Pendelgewicht angeordnet ist,
**dadurch gekennzeichnet, dass** das Pendellager ein Wälzkörperpendellager (70) nach mindestens einem der vorangegangenen Ansprüche ist, wobei die Pendeleinheit (72) gegenüber dem Hohlkörper (8) des Wälzkörperpendellagers im Wesentlichen ortsfest angeordnet ist.

## Claims

1. Rolling body pendulum bearing, particularly for supporting gyroscopic systems of a gyrocompass, with
- a rotational body (14, 18) with a convex outer surface section (14c) that is partially spherical relative to the first axis (22), which section is formed in mirror symmetry relative to a first symmetry plane (24) extending substantially transversely to the first axis (22),
- a first hollow body (8) comprising a first hollow chamber that holds the rotational body (14,18) in the region of its partially spherical outer surface section (14c), the hollow chamber having a first opening (4) on a first end face (8a), a second opening (6) on a second end face (8b) lying opposite the first end face (8a) and a concave inner surface section (8c) that is partially spherical relative to a second axis (26) and lies between these two openings (4, 6), and which is formed in mirror symmetry relative to a second symmetry plane (28) extending substantially transversely to the second axis (26), wherein the first symmetry plane (24) and the second symmetry plane (28) are able to pivot about a common intersecting line and the first axis (22) and the second axis (26) are able to pivot about a common pivot point (30) lying opposite each other substantially on the intersecting line, the central point of the partially spherical outer surface section (14c) of the rotational body (14), the central point of the partially spherical inner surface section (8c) of the first hollow body (8) and the pivot point (30) substantially coincide and a first intermediate space (16) is formed between the partially spherical outer surface section (14c) of the rotational body (14) and the partially spherical inner surface section (8c) of the first hollow body (8),
- rolling bodies (10) running in the first intermediate space (16), a first cage (12) arranged in the first intermediate space (16) and holding the rolling bodies (10), and
- a first stop (2d), which the first cage (12) or at least one adjacent rolling body (10) abuts in a maximum pivoting position of the rotational body (14, 18),
- wherein the location and design of the rotational body (14, 18), of the first hollow body (8), of the rolling bodies (10) and of the first cage (12) are such that the rolling bodies (10) still remain substantially inside the first intermediate space (16) in the maximum pivoting position of the rotational body (14, 18),
**characterised by**
- a second stop (20) provided on the rotational body (14, 18) in the region adjacent to the first stop (2d), which impacts against the first cage (12) and/or at least against an adjacent rolling body (10) simultaneously when the rotational body (14, 18) is located in the maximum pivoting position in relation to the second axis (26).

2. Rolling body pendulum bearing according to claim 1, **characterised in that** the second stop (20) is formed to abut an end face (12a) of the first cage (12).

3. Rolling body pendulum bearing according to claim 1 or 2, **characterised in that** the first stop (2d) is formed such that only the rolling bodies (10) adjacent to it can abut the first stop (2d).

4. Rolling body pendulum bearing according to at least one of the preceding claims, **characterised in that** the first stop (2d) delimits the partially spherical inner surface section (8c) of the first hollow body (8).

5. Rolling body pendulum bearing according to at least one of the preceding claims, **characterised in that** the first stop (2d) is provided in the region of the opening (4) of the first hollow body (8) located adjacent to the second stop (20).

6. Rolling body pendulum bearing according to claim 5, **characterised in that** the first stop (2d) is formed as a bridge extending into the opening (4), preferably encircling it substantially completely.

7. Rolling body pendulum bearing according to at least one of the preceding claims, **characterised in that** the axial length of the partially spherical outer surface section (14c) is substantially equal to the axial length of the cage (12).

8. Rolling body pendulum bearing according to at least one of the preceding claims, **characterised in that** the rolling bodies (10) are arranged in the first intermediate space (16) in two rows on top of each other.

9. Rolling body pendulum bearing according to at least one of the preceding claims, **characterised in that** the rolling bodies (10) are formed as spheres.

10. Rolling body pendulum bearing according to at least one of the preceding claims, **characterised in that** the rotational body (14, 18) has a bar (18) whose longitudinal axis coincides substantially with the first axis (22).

11. Rolling body pendulum bearing according to claim 10, **characterised in that** the second stop (20) is arranged on the bar (18) and is formed as a collar (20) encircling the bar (18) and at a distance from it.

12. Rolling body pendulum bearing according to claim 10 or 11, **characterised by** a stationary or spatially fixed third stop (4a) which is formed such that the bar (18) rests on the third stop (4a) in its maximum pivoting position.

13. Rolling body pendulum bearing according to claim 12, **characterised in that** the third stop (4a) has a face inclined in relation to the second axis (26), which the bar (18) abuts with a top section (18a).

14. Rolling body pendulum bearing according to claim 13, with a housing (2), which has a first opening (4) on a first end face (2a) and a second opening (6) on a second end face (2b) opposite the first end face (2a), wherein the first hollow body (8) is fixed in the housing (2) between its two openings (4, 6), **characterised in that** the face of the third stop (4a) is formed on one of the two housing openings (4).

15. Rolling body pendulum bearing according to at least one of the preceding claims, **characterised in that**
- a second hollow body (40) is provided, which has a first opening on a first end face, a second opening on a second end face opposite the first end face, and between these two openings a concave inner surface section (40c), partially spherical in relation to a third axis (46), and a convex outer surface section (40d), partially spherical in relation to the third axis (46), wherein both the partially spherical inner surface section (40c) as well as the partially spherical outer surface section (40d) of the second hollow body (40) is each formed in mirror summetry relative to a third symmetry plane (48) extending transversely to the third axis (46), wherein the third symmetry plane (48) can pivot relative to the second symmetry plane (28) about the same common intersecting line as the first symmetry plane (24) relative to the second symmetry plane (28) and the third axis (46) relative to the second axis (26) can pivot substantially about the same common pivot point (30) lying on the intersecting line as the first axis (22) can relative to the second axis (26),
- a second intermediate space (42) is formed between the partially spherical outer surface section (40d) of the second hollow body (40) and the partially spherical inner surface section (8c) of the first hollow body (8) of the first intermediate space (16) and between the partially spherical outer surface section (14c) of the rotational body (14, 18) and the partially spherical inner surface section (40c) of the second hollow body (40),
- rolling bodies (10) run in the second intermediate space (42) and a second cage (44) is arranged holding this rolling body (10),
- located adjacent to the second stop (20), a fourth stop (40a) is provided on which, in the maximum pivoting position of the bar (18), the second cage (44) or at least an adjacent rolling body (10) simultaneously abuts, and
- the location and design of the two hollow bodies (8, 40) are arranged such that, in the maximum pivoting position of the rotational body (14, 18) the rolling bodies (10) still remain substantially inside the second intermediate space (42).

16. Rolling body pendulum bearing according to claim 15, **characterised in that** the central point of the partially spherical inner surface section (40c) of the second hollow body (40) and the central point of the partially spherical outer surface section (40d) of the second hollow body (40) substantially coincide with the pivot point (30).

17. Rolling body pendulum bearing according to claim 15, **characterised in that** there is a gap on the second axis (26) between the central point of the partially spherical inner surface section (40c) of the second hollow body (40) and the central point of the partially spherical outer surface section (40d) of the second hollow body (40).

18. Rolling body pendulum bearing according to at least one of the claims 15 to 17, **characterised in that** the fourth stop (40a) is provided in the region of the opening of the second hollow body (40) located adjacent to the first stop (20).

19. Rolling body pendulum bearing according to at least one of the claims 15 to 18, **characterised in that** the fourth stop (40a) is formed on the partially spherical inner surface section (40c) of the second hollow body (40) adjacent to at least one of its two openings.

20. Rolling body pendulum bearing according to at least one of the claims 15 to 19, **characterised in that** a fifth stop (40b) is formed on the partially spherical outer surface section (40d) of the second hollow body (40) adjacent to at least one of its two openings on which, in the maximum pivoting position of the bar (18), at least an adjacent rolling body (10) and/or the first cage (12) abut(s).

21. Rolling body pendulum bearing according to at least one of the claims 15 to 20, **characterised in that** the rolling bodies (10) are arranged in the second intermediate space (42) in two rows on top of each other.

22. Gyrocompass device with a pendulum unit (72) which has a gyroscopic system (76), supported so that it can rotate, and a pendulum bearing, on which the pendulum unit (72) is arranged as a bob, **characterised in that** the pendulum bearing according to at least one of the preceding claims is a rolling body pendulum bearing (70) wherein the pendulum unit (72) is arranged substantially immovably relative to the hollow body (8) of the rolling body pendulum bearing.

## Revendications

1. Palier à roulement oscillant, en particulier pour le logement de systèmes gyroscopiques d'une boussole gyroscopique, avec
- un corps rotatif (14, 18) avec une section de surface (14c) extérieure convexe partiellement sphérique par rapport à un premier axe (22) qui est réalisée de manière symétrique par rapport à un premier plan de symétrie (24) monté sensiblement transversalement au premier axe (22),
- un premier corps creux (8) avec un premier espace creux recevant le corps rotatif (14, 18) dans la zone de sa section de surface (14c) extérieure partiellement sphérique, lequel espace creux présente sur un premier côté avant (8a) une première ouverture (4), sur un second côté avant (8b) en regard du premier côté avant (8a) une seconde ouverture (6) et entre ces deux ouvertures (4, 6), une section de surface (8c) intérieure concave, partiellement sphérique par rapport à un second axe (26), qui est réalisée de manière symétrique par rapport à un deuxième plan de symétrie (28) monté sensiblement transversalement au second axe (26), le premier plan de symétrie (24) et le deuxième plan de symétrie (28) étant pivotants l'un contre l'autre autour d'une ligne de coupe et le premier axe (22) et le second axe (26) autour d'un point de rotation commun (30) se trouvant sensiblement sur la ligne de coupe, le point médian de la section de surface (14c) extérieure partiellement sphérique du corps rotatif (14), le point médian de la section de surface (8c) intérieure partiellement sphérique du premier corps creux (8) et le point de rotation (30) coïncidant sensiblement et un premier espace intermédiaire (16) étant formé entre la section de surface (14c) extérieure partiellement sphérique du corps rotatif (14) et la section de surface (8c) intérieure partiellement sphérique du premier corps creux (8),
- des corps roulants (10) roulant dans le premier espace intermédiaire (16),
- une première cage (12) recevant les corps roulants (10) et agencée dans le premier espace intermédiaire (16) et
- une première butée (2d), contre laquelle dans une position de pivotement maximale du corps rotatif (14, 18), la première cage (12) ou au moins un corps roulant contigu (10) parvient en appui,
- l'agencement et la réalisation du corps rotatif (14, 18), du premier corps creux (8), des corps roulants (10) et de la première cage (12) étant choisis de telle manière que dans la position de pivotement maximale du corps rotatif (14, 18), les corps roulants (10) restent encore sensiblement dans le premier espace intermédiaire (16),
**caractérisé par**
- une deuxième butée (20) prévue dans la zone contiguë à la première butée (2d) sur le corps rotatif (14, 18), laquelle deuxième butée bute simultanément contre la première cage (12) et/ou au moins un corps roulant contigu (10) lorsque le corps rotatif (14, 18) se trouve dans la position de pivotement maximale par rapport au second axe (26).

2. Palier à roulement oscillant selon la revendication 1, **caractérisé en ce que** la deuxième butée (20) est réalisée afin de parvenir en appui contre un côté avant (12a) de la première cage (12).

3. Palier à roulement oscillant selon la revendication 1 ou 2, **caractérisé en ce que** la première butée (2d) est réalisée de telle manière que seuls les corps roulants (10) qui lui sont contigus puissent être amenés en appui contre la première butée (2d).

4. Palier à roulement oscillant selon au moins l'une quelconque des revendications précédentes, **caractérisé en ce que** la première butée (2d) limite la section de surface (8c) intérieure partiellement sphérique du premier corps creux (8).

5. Palier à roulement oscillant selon au moins l'une quelconque des revendications précédentes, **caractérisé en ce que** la première butée (2d) est prévue dans la zone de l'ouverture (4), se trouvant de manière contiguë à la deuxième butée (20), du premier corps creux (8).

6. Palier à roulement oscillant selon la revendication 5, **caractérisé en ce que** la première butée (2d) est réalisée comme une nervure pénétrant dans l'ouverture (4), tournant de préférence sensiblement complètement.

7. Palier à roulement oscillant selon au moins l'une quelconque des revendications précédentes, **caractérisé en ce que** la longueur axiale de la section de surface (14c) extérieure partiellement sphérique est sensiblement identique à la longueur axiale de la cage (12).

8. Palier à roulement oscillant selon au moins l'une quelconque des revendications précédentes, **caractérisé en ce que** les corps roulants (10) sont agencés dans le premier espace intermédiaire (16) dans deux rangées superposées.

9. Palier à roulement oscillant selon au moins l'une quelconque des revendications précédentes, **caractérisé en ce que** les corps roulants (10) sont réalisés comme des billes.

10. Palier à roulement oscillant selon au moins l'une quelconque des revendications précédentes, **caractérisé en ce que** le corps rotatif (14, 18) présente une barre (18), dont l'axe longitudinal coïncide sensiblement avec le premier axe (22).

11. Palier à roulement oscillant selon la revendication 10, **caractérisé en ce que** la deuxième butée (20) est agencée sur la barre (18) et est réalisée comme un collet (20) entourant la barre (18) et dépassant de celle-ci.

12. Palier à roulement oscillant selon la revendication 10 ou 11, **caractérisé par** une troisième butée (4a) agencée de manière stationnaire ou fixe qui est réalisée de sorte que la barre (18) repose dans sa position de pivotement maximale contre la troisième butée (4a).

13. Palier à roulement oscillant selon la revendication 12, **caractérisé en ce que** la troisième butée (4a) présente une surface inclinée par rapport au second axe (26), contre laquelle la barre (18) parvient en appui avec une section enveloppe (18a).

14. Palier à roulement oscillant selon la revendication 13 avec un boîtier (2) qui présente sur un premier côté avant (2a), une première ouverture (4) et sur un second côté avant (2b) en regard du premier côté avant (2a), une seconde ouverture (6), le premier corps creux (8) étant fixé dans le boîtier (2) entre ses deux ouvertures (4, 6), **caractérisé en ce que** la surface de la troisième butée (4a) est réalisée sur l'une des deux ouvertures de boîtier (4).

15. Palier à roulement oscillant selon au moins l'une quelconque des revendications précédentes, **caractérisé en ce que**
- un second corps creux (40) est prévu, lequel présente sur un premier côté avant une première ouverture, sur un second côté avant en regard du premier côté avant, une seconde ouverture et entre ces deux ouvertures, une section de surface (40c) intérieure concave, partiellement sphérique par rapport à un troisième axe (46), ainsi qu'une section de surface (40d) extérieure convexe, partiellement sphérique par rapport au troisième axe (46), non seulement la section de surface (40c) intérieure partiellement sphérique mais aussi la section de surface (40d) extérieure partiellement sphérique du second corps creux (40) étant réalisées respectivement de manière symétrique par rapport à un troisième plan de symétrie (48) monté transversalement au troisième axe (46), le troisième plan de symétrie (48) pouvant être pivoté par rapport au deuxième plan de symétrie (28) autour de la même ligne de coupe commune que le premier plan de symétrie (24) par rapport au deuxième plan de symétrie (28) et le troisième axe (46) par rapport au second axe (26) sensiblement autour du même point de rotation (30) commun se trouvant sur la ligne de coupe que le premier axe (22) par rapport au second axe (26),
- le premier espace intermédiaire (16) étant formé entre la section de surface (40d) extérieure partiellement sphérique du second corps creux (40) et la section de surface (8c) intérieure partiellement sphérique du premier corps creux (8) et un second espace intermédiaire (42) étant formé entre la section de surface (14c) extérieure partiellement sphérique du corps rotatif (14, 18) et la section de surface (40c) intérieure partiellement sphérique du second corps creux (40),
- des corps roulants (10) roulant dans le second espace intermédiaire (42) et une seconde cage (44) recevant ces corps roulants (10) étant agencée,
- une quatrième butée (40a) étant prévue de manière contiguë à la deuxième butée (20), contre laquelle quatrième butée la seconde cage (44) ou au moins un corps roulant contigu (10) parvient en appui simultanément dans la position de pivotement maximale de la barre (18) et
- l'agencement et la réalisation des deux corps creux (8, 40) étant choisis de telle manière que dans la position de pivotement maximale du corps rotatif (14, 18), les corps roulants (10) restent sensiblement encore dans le second espace intermédiaire (42).

16. Palier à roulement oscillant selon la revendication 15, **caractérisé en ce que** le point médian de la section de surface (40c) intérieure partiellement sphérique du second corps creux (40) et le point médian de la section de surface (40d) extérieure partiellement sphérique du second corps creux (40) coïncident sensiblement avec le point de rotation (30).

17. Palier à roulement oscillant selon la revendication 15, **caractérisé en ce que** le point médian de la section de surface (40c) intérieure partiellement sphérique du second corps creux (40) et le point médian de la section de surface (40d) extérieure partiellement sphérique du second corps creux (40) se trouvent à distance l'un de l'autre sur le second axe (26).

18. Palier à roulement oscillant selon au moins l'une quelconque des revendications 15 à 17, **caractérisé en ce que** la quatrième butée (40a) est prévue dans la zone de l'ouverture se trouvant de manière contiguë à la première butée (20) du second corps creux (40).

19. Palier à roulement oscillant selon au moins l'une quelconque des revendications 15 à 18, **caractérisé en ce que** la quatrième butée (40a) est réalisée sur la section de surface (40c) intérieure partiellement sphérique du second corps creux (40) de manière contiguë à au moins une de ses deux ouvertures.

20. Palier à roulement oscillant selon au moins l'une quelconque des revendications 15 à 19, **caractérisé en ce qu'**une cinquième butée (40b) est réalisée sur la section de surface (40d) extérieure partiellement sphérique du second corps creux (40) de manière contiguë à au moins une de ses deux ouvertures, contre laquelle cinquième butée au moins un corps roulant (10) contigu et/ou la première cage (12) parvient en appui dans la position de pivotement maximale de la barre (18).

21. Palier à roulement oscillant selon au moins l'une quelconque des revendications 15 à 20, **caractérisé en ce que** les corps roulants (10) sont agencés dans le second espace intermédiaire (42) dans deux rangées superposées.

22. Dispositif de boussole gyroscopique avec une unité oscillante (72) qui présente un système gyroscopique (76) logé de manière rotative, et un palier oscillant, sur lequel est agencée l'unité oscillante (72) comme poids oscillant, **caractérisé en ce que** le palier oscillant est un palier à roulement oscillant (70) selon au moins l'une quelconque des revendications précédentes, l'unité oscillante (72) étant agencée sensiblement fixement par rapport au corps creux (8) du palier à roulement oscillant.
